# EUROPEAN PATENT APPLICATION

(11) **EP 4 351 263 A1**
(43) Date of publication of application: **10.04.2024**
(21) Application number: 22824044.6
(22) Date of filing: 30.05.2022
(51) Int. Cl.: H04W 76/11

(54) **INFORMATION PROCESSING METHOD, APPARATUS AND SYSTEM**

(30) Priority: 16.06.2021 CN 202110666955; 31.07.2021 CN 202110876932
(71) Applicant: Huawei Technologies Co., Ltd., Longgang Shenzhen, Guangdong 518129 (CN)
(72) Inventor: HU, Zhibo, Shenzhen, Guangdong 518129 (CN); BAO, Lei, Shenzhen, Guangdong 518129 (CN); DONG, Jie, Shenzhen, Guangdong 518129 (CN); XU, Guoqi, Shenzhen, Guangdong 518129 (CN); YAN, Zhaoyang, Shenzhen, Guangdong 518129 (CN); ZHUANG, Shunwan, Shenzhen, Guangdong 518129 (CN)
(74) Representative: Huawei European IPR
(86) International application number: PCT/CN2022/095962
(87) International publication number: WO 2022/262564

(57) **Abstract**

This application provides an information processing method, apparatus, and system. The method includes: A controller determines network slice information corresponding to a first network device. The controller sends a border gateway protocol BGP packet to the first network device, where the BGP packet includes the network slice information, and the network slice information is used by the first network device to configure a network slice. According to the technical solution provided in this application, efficiency of delivering network slice information can be improved.

## Description

This application claims priority to Chinese Patent Application No. 202110876932.2, filed with the China National Intellectual Property Administration on July 31, 2021 and entitled "INFORMATION PROCESSING METHOD, APPARATUS, AND SYSTEM", which is incorporated herein by reference in its entirety.

This application claims priority to Chinese Patent Application No. 202110666955.0, filed with the China National Intellectual Property Administration on June 16, 2021 and entitled "NETWORK SLICE DELIVERING METHOD, DEVICE, AND SYSTEM", which is incorporated herein by reference in its entirety.

### TECHNICAL FIELD

This application relates to the field of network communication, and more specifically, to an information processing method, apparatus, and system.

### BACKGROUND

Network slicing is an on-demand networking manner that enables an operator to obtain a plurality of end-to-end networks through separation on a unified infrastructure. To be specific, a physical network of the operator may be divided into a plurality of virtual networks. Each virtual network may flexibly cope with different network application scenarios based on different service requirements (for example, a delay, a bandwidth, security, and reliability).

For a device in the network, a network slice may be configured based on network slice information. Based on the configured network slice, requirements of a service level agreement (service level agreement, SLA) between a service access point and each node are met in a given physical topology. In a related technical solution, a controller delivers the network slice information to the device in the network through a network configuration protocol (network configuration protocol, netconf). For a K-level network slice, the controller needs to deliver a large amount of network slice information. Therefore, efficiency of delivering the network slice information by the controller through the netconf is low, and a delivery speed, a total amount of delivered network slice information in a unit time, or the like cannot be met.

Therefore, how to improve the efficiency of delivering the network slice information becomes a technical problem that needs to be urgently resolved.

### SUMMARY

This application provides an information processing method, apparatus, and system, to improve efficiency of delivering network slice information.

According to a first aspect, an information processing method is provided. The method includes: A controller determines network slice information corresponding to a first network device. The controller sends a border gateway protocol BGP packet to the first network device, where the BGP packet includes the network slice information, and the network slice information is used by the first network device to configure a network slice.

In the foregoing technical solution, the controller delivers the network slice information to a device through a BGP. A delivery speed or a total amount of delivered network slice information in a unit time can be met, thereby improving efficiency of delivering the network slice information.

With reference to the first aspect, in a possible implementation of the first aspect, the BGP packet includes link state LS information. The LS information includes the network slice information.

With reference to the first aspect, in a possible implementation of the first aspect, the LS information includes a node attribute sub-TLV. The node attribute sub-TLV includes node-level network slice information. The node-level network slice information includes an identifier of a network slice supported by the first network device and a topology identifier corresponding to the network slice.

With reference to the first aspect, in a possible implementation of the first aspect, the LS information includes a link attribute sub-TLV. The link attribute sub-TLV includes link-level network slice information. The link-level network slice information includes the identifier of the network slice supported by the first network device and information about a bandwidth reserved for the network slice.

With reference to the first aspect, in a possible implementation of the first aspect, the LS information includes a prefix attribute sub-TLV. The prefix attribute sub-TLV includes prefix-level network slice information. The prefix-level network slice information includes an identifier of a network slice that is used for transmitting an IPv4 packet or an IPv6 packet and that is on the first network device.

With reference to the first aspect, in a possible implementation of the first aspect, the BGP packet includes network slice address family information. The network slice address family information includes the network slice information.

With reference to the first aspect, in a possible implementation of the first aspect, the network slice address family information includes a node attribute sub-TLV. The node attribute sub-TLV includes link-level network slice information.

With reference to the first aspect, in a possible implementation of the first aspect, the network slice address family information includes a link attribute sub-TLV The link attribute sub-TLV includes prefix-level network slice information.

With reference to the first aspect, in a possible implementation of the first aspect, the network slice address family information includes a prefix attribute sub-TLV The prefix attribute sub-TLV includes prefix-level network slice information.

With reference to the first aspect, in a possible implementation of the first aspect, the BGP packet is a BGP update message.

According to a second aspect, an information processing method is provided. The method includes: A first network device receives a border gateway protocol BGP packet sent by a controller, where the BGP packet includes network slice information. The first network device configures a network slice based on the network slice information.

With reference to the second aspect, in a possible implementation of the second aspect, the BGP packet includes link state LS information. The LS information includes the network slice information.

With reference to the second aspect, in a possible implementation of the second aspect, the LS information includes a node attribute sub-TLV. The node attribute sub-TLV includes node-level network slice information. The node-level network slice information includes an identifier of a network slice supported by the first network device and a topology identifier corresponding to the network slice.

With reference to the second aspect, in a possible implementation of the second aspect, the LS information includes a link attribute sub-TLV. The link attribute sub-TLV includes link-level network slice information. The link-level network slice information includes the identifier of the network slice supported by the first network device and information about a bandwidth reserved for the network slice.

With reference to the second aspect, in a possible implementation of the second aspect, the LS information includes a prefix attribute sub-TLV. The prefix attribute sub-TLV includes prefix-level network slice information. The prefix-level network slice information includes an identifier of a network slice that is used for transmitting an IPv4 packet or an IPv6 packet and that is on the first network device.

With reference to the second aspect, in a possible implementation of the second aspect, the BGP packet includes network slice address family information. The network slice address family information includes the network slice information.

With reference to the second aspect, in a possible implementation of the second aspect, the network slice address family information includes a node attribute sub-TLV. The node attribute sub-TLV includes link-level network slice information.

With reference to the second aspect, in a possible implementation of the second aspect, the network slice address family information includes a link attribute sub-TLV The link attribute sub-TLV includes prefix-level network slice information.

With reference to the second aspect, in a possible implementation of the second aspect, the network slice address family information includes a prefix attribute sub-TLV The prefix attribute sub-TLV includes prefix-level network slice information.

With reference to the second aspect, in a possible implementation of the second aspect, the method further includes: The first network device determines global network slice information based on the network slice information, where the global network slice information includes an identifier of a network slice, a topology identifier used by the network slice, a link affinity attribute of a slice interface associated with the network slice, and information about a bandwidth reserved for the network slice. The first network device sends an interior gateway protocol IGP packet to a second network device, where the IGP packet includes the global network slice information, and the IGP packet is used by the second network device to configure a network slice based on the global network slice information.

With reference to the second aspect, in a possible implementation of the second aspect, the IGP packet includes flexible algorithm definition FAD information. The FAD information includes a network slice sub-TLV The network slice sub-TLV includes the global network slice information.

With reference to the second aspect, in a possible implementation of the second aspect, the BGP packet is a BGP update message.

Beneficial effects of the second aspect and any possible implementation of the second aspect correspond to beneficial effects of the first aspect and any possible implementation of the first aspect. Details are not described herein again.

According to a third aspect, an information processing apparatus is provided. The apparatus is disposed in a controller and includes a processing module and a sending module. The processing module is configured to determine network slice information corresponding to a first network device. The sending module is configured to send a border gateway protocol BGP packet to the first network device, where the BGP packet includes the network slice information, and the network slice information is used by the first network device to configure a network slice.

With reference to the third aspect, in a possible implementation of the third aspect, the BGP packet includes link state LS information. The LS information includes the network slice information.

With reference to the third aspect, in a possible implementation of the third aspect, the LS information includes a node attribute sub-TLV. The node attribute sub-TLV includes node-level network slice information. The node-level network slice information includes an identifier of a network slice supported by the first network device and a topology identifier corresponding to the network slice.

With reference to the third aspect, in a possible implementation of the third aspect, the LS information includes a link attribute sub-TLV. The link attribute sub-TLV includes link-level network slice information. The link-level network slice information includes the identifier of the network slice supported by the first network device and information about a bandwidth reserved for the network slice.

With reference to the third aspect, in a possible implementation of the third aspect, the LS information includes a prefix attribute sub-TLV. The prefix attribute sub-TLV includes prefix-level network slice information. The prefix-level network slice information includes an identifier of a network slice that is used for transmitting an IPv4 packet or an IPv6 packet and that is on the first network device.

With reference to the third aspect, in a possible implementation of the third aspect, the BGP packet includes network slice address family information. The network slice address family information includes the network slice information.

With reference to the third aspect, in a possible implementation of the third aspect, the network slice address family information includes a node attribute sub-TLV. The node attribute sub-TLV includes link-level network slice information.

With reference to the third aspect, in a possible implementation of the third aspect, the network slice address family information includes a link attribute sub-TLV The link attribute sub-TLV includes prefix-level network slice information.

With reference to the third aspect, in a possible implementation of the third aspect, the network slice address family information includes a prefix attribute sub-TLV The prefix attribute sub-TLV includes prefix-level network slice information.

With reference to the third aspect, in a possible implementation of the third aspect, the BGP packet is a BGP update message.

According to a fourth aspect, an information processing apparatus is provided. The apparatus is disposed in a first network device and includes a receiving module and a processing module. The receiving module is configured to receive a border gateway protocol BGP packet sent by a controller, where the BGP packet includes network slice information. The processing module is configured to configure a network slice based on the network slice information.

With reference to the fourth aspect, in a possible implementation of the fourth aspect, the BGP packet includes link state LS information. The LS information includes the network slice information.

With reference to the fourth aspect, in a possible implementation of the fourth aspect, the LS information includes a node attribute sub-TLV The node attribute sub-TLV includes node-level network slice information. The node-level network slice information includes an identifier of a network slice supported by the first network device and a topology identifier corresponding to the network slice.

With reference to the fourth aspect, in a possible implementation of the fourth aspect, the LS information includes a link attribute sub-TLV. The link attribute sub-TLV includes link-level network slice information. The link-level network slice information includes the identifier of the network slice supported by the first network device and information about a bandwidth reserved for the network slice.

With reference to the fourth aspect, in a possible implementation of the fourth aspect, the LS information includes a prefix attribute sub-TLV. The prefix attribute sub-TLV includes prefix-level network slice information. The prefix-level network slice information includes an identifier of a network slice that is used for transmitting an IPv4 packet or an IPv6 packet and that is on the first network device.

With reference to the fourth aspect, in a possible implementation of the fourth aspect, the BGP packet includes network slice address family information. The network slice address family information includes the network slice information.

With reference to the fourth aspect, in a possible implementation of the fourth aspect, the network slice address family information includes a node attribute sub-TLV. The node attribute sub-TLV includes link-level network slice information.

With reference to the fourth aspect, in a possible implementation of the fourth aspect, the network slice address family information includes a link attribute sub-TLV The link attribute sub-TLV includes prefix-level network slice information.

With reference to the fourth aspect, in a possible implementation of the fourth aspect, the network slice address family information includes a prefix attribute sub-TLV The prefix attribute sub-TLV includes prefix-level network slice information.

With reference to the fourth aspect, in a possible implementation of the fourth aspect, the processing module is further configured to determine global network slice information based on the network slice information. The global network slice information includes an identifier of a network slice, a topology identifier used by the network slice, a link affinity attribute of a slice interface associated with the network slice, and information about a bandwidth reserved for the network slice.

The apparatus further includes a sending module, configured to send an interior gateway protocol IGP packet to a second network device. The IGP packet includes the global network slice information. The IGP packet is used by the second network device to configure a network slice based on the global network slice information.

With reference to the fourth aspect, in a possible implementation of the fourth aspect, the IGP packet includes flexible algorithm definition FAD information. The FAD information includes a network slice sub-TLV The network slice sub-TLV includes the global network slice information.

With reference to the fourth aspect, in a possible implementation of the fourth aspect, the BGP packet is a BGP update message.

According to a fifth aspect, a controller is provided. The controller has a function of implementing the foregoing information processing apparatus. The function may be implemented based on hardware, or may be implemented based on hardware by executing corresponding software. The hardware or the software includes one or more modules corresponding to the foregoing function.

In a possible design, a structure of the controller includes a processor. The processor is configured to support the controller in performing a corresponding function in the foregoing method.

The controller may further include a memory. The memory is configured to be coupled to the processor. The memory stores program instructions and data that the controller needs.

In another possible design, the controller includes a processor, a transmitter, a receiver, a random access memory, a read-only memory, and a bus. The processor is separately coupled to the transmitter, the receiver, the random access memory, and the read-only memory through the bus. When the controller needs to be run, a basic input/output system or a bootloader in an embedded system that is built into the read-only memory is used to boot a system to start, and boot the controller to enter a normal running state. After entering the normal running state, the controller runs an application program and an operating system in the random access memory, so that the processor is enabled to perform the method in the first aspect or any possible implementation of the first aspect.

According to a sixth aspect, a controller is provided. The controller includes a main control board and an interface board, and may further include a switching board. The controller is configured to perform the information processing method in the first aspect or any possible implementation of the first aspect.

It should be noted that there may be one or more main control boards. When there are a plurality of main control boards, the main control boards may include an active main control board and a standby main control board. There may be one or more interface boards. A stronger data processing capability of a first network device indicates more interface boards. There may also be one or more physical interface cards on the interface board. There may be no or one or more switching boards. When there are a plurality of switching boards, load sharing and redundancy backup can be implemented. In a centralized forwarding architecture, the controller may not need the switching board. The interface board is responsible for processing service data of an entire system. In a distributed forwarding architecture, the first network device may have at least one switching board. Data exchange between a plurality of interface boards is implemented by using the switching board, to provide large-capacity data exchange and a processing capability. Therefore, data access and processing capabilities of the controller in the distributed architecture are higher than those of a device in a centralized architecture. A specific architecture that is to be used depends on a specific networking deployment scenario. This is not limited herein.

According to a seventh aspect, a controller is provided. The controller includes a control module and a first forwarding sub-device. The first forwarding sub-device includes an interface board, and may further include a switching board. The first forwarding sub-device is configured to perform the function of the interface board in the sixth aspect, and may further perform the function of the switching board in the sixth aspect. The control module includes a receiver, a processor, a transmitter, a random access memory, a read-only memory, and a bus. The processor is separately coupled to the receiver, the transmitter, the random access memory, and the read-only memory through the bus. When the control module needs to be run, a basic input/output system or a bootloader in an embedded system that is built into the read-only memory is used to boot a system to start, and boot the control module to enter a normal running state. After entering the normal running state, the control module runs an application program and an operating system in the random access memory, so that the processor is enabled to perform the function of the main control board in the sixth aspect.

It may be understood that in actual application, the controller may include any quantity of interfaces, processors, or memories.

According to an eighth aspect, a first network device is provided. The first network device has a function of implementing the foregoing information processing apparatus. The function may be implemented based on hardware, or may be implemented based on hardware by executing corresponding software. The hardware or the software includes one or more modules corresponding to the foregoing function.

In a possible design, a structure of the first network device includes a processor. The processor is configured to support the first network device in performing a corresponding function in the foregoing method.

The first network device may include a memory. The memory is configured to be coupled to the processor. The memory stores program instructions and data that the first network device needs.

In another possible design, the first network device includes a processor, a transmitter, a receiver, a random access memory, a read-only memory, and a bus. The processor is separately coupled to the transmitter, the receiver, the random access memory, and the read-only memory through the bus. When the first network device needs to be run, a basic input/output system or a bootloader in an embedded system that is built into the read-only memory is used to boot a system to start, and boot the first network device to enter a normal running state. After entering the normal running state, the first network device runs an application program and an operating system in the random access memory, so that the processor is enabled to perform the method in the second aspect or any possible implementation of the second aspect.

According to a ninth aspect, a first network device is provided. The first network device includes a main control board and an interface board, and may further include a switching board. The first network device is configured to perform the information processing method according to the second aspect or any possible implementation of the second aspect.

It should be noted that there may be one or more main control boards. When there are a plurality of main control boards, the main control boards may include an active main control board and a standby main control board. There may be one or more interface boards. A stronger data processing capability of the first network device indicates more interface boards. There may also be one or more physical interface cards on the interface board. There may be no or one or more switching boards. When there are a plurality of switching boards, load sharing and redundancy backup can be implemented. In a centralized forwarding architecture, the first network device may not need the switching board, and the interface board is responsible for processing service data of an entire system. In a distributed forwarding architecture, the first network device may have at least one switching board. Data exchange between a plurality of interface boards is implemented by using the switching board, to provide large-capacity data exchange and a processing capability. Therefore, data access and processing capabilities of the first network device in the distributed architecture are higher than those of a device in a centralized architecture. A specific architecture that is to be used depends on a specific networking deployment scenario. This is not limited herein.

According to a tenth aspect, a first network device is provided. The first network device includes a control module and a first forwarding sub-device. The first forwarding sub-device includes an interface board, and may further include a switching board. The first forwarding sub-device is configured to perform the function of the interface board in the ninth aspect, and may further perform the function of the switching board in the ninth aspect. The control module includes a receiver, a processor, a transmitter, a random access memory, a read-only memory, and a bus. The processor is separately coupled to the receiver, the transmitter, the random access memory, and the read-only memory through the bus. When the control module needs to be run, a basic input/output system or a bootloader in an embedded system that is built into the read-only memory is used to boot a system to start, and boot the control module to enter a normal running state. After entering the normal running state, the control module runs an application program and an operating system in the random access memory, so that the processor is enabled to perform the function of the main control board in the ninth aspect.

It may be understood that in actual application, the first network device may include any quantity of interfaces, processors, or memories.

According to an eleventh aspect, a computer program product is provided. The computer program product includes computer program code. When the computer program code is run on a computer, the computer is enabled to perform the method according to the first aspect or any possible implementation of the first aspect.

According to a twelfth aspect, a computer program product is provided. The computer program product includes computer program code. When the computer program code is run on a computer, the computer is enabled to perform the method according to the second aspect or any possible implementation of the second aspect.

According to a thirteenth aspect, a computer-readable medium is provided. The computer-readable medium stores program code. When the computer program code is run on a computer, the computer is enabled to perform the method according to the first aspect or any possible implementation of the first aspect. The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

According to a fourteenth aspect, a computer-readable medium is provided. The computer-readable medium stores program code. When the computer program code is run on a computer, the computer is enabled to perform the method according to the second aspect or any possible implementation of the second aspect. The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

According to a fifteenth aspect, a chip is provided. The chip includes a processor and a data interface. The processor reads, through the data interface, instructions stored in a memory, to perform the method according to the first aspect or any possible implementation of the first aspect. In a specific implementation process, the chip may be implemented in a form of a central processing unit (central processing unit, CPU), a microcontroller unit (microcontroller unit, MCU), a micro processing unit (micro processing unit, MPU), a digital signal processor (digital signal processor, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

According to a sixteenth aspect, a chip is provided. The chip includes a processor and a data interface. The processor reads, through the data interface, instructions stored in a memory, to perform the method according to the second aspect or any possible implementation of the second aspect. In a specific implementation process, the chip may be implemented in a form of a central processing unit (central processing unit, CPU), a microcontroller unit (microcontroller unit, MCU), a micro processing unit (micro processing unit, MPU), a digital signal processor (digital signal processor, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

According to a seventeenth aspect, an information processing system is provided. The system includes the information processing apparatus according to the third aspect or any possible implementation of the third aspect and/or the information processing apparatus according to the fourth aspect or any possible implementation of the fourth aspect.

### BRIEF DESCRIPTION OF DRAWINGS

FIG. 1 is a schematic diagram of a scenario of a network slice applied to an embodiment of this application;
FIG. 2 is a schematic flowchart of an information processing method according to an embodiment of this application;
FIG. 3 is a schematic diagram of a format of a node attribute sub-TLV according to an embodiment of this application;
FIG. 4 is a schematic diagram of a format of a link attribute sub-TLV according to an embodiment of this application;
FIG. 5 is a schematic diagram of a format of a prefix attribute sub-TLV according to an embodiment of this application;
FIG. 6 is a schematic diagram of networking according to an embodiment of this application;
FIG. 7 is another schematic diagram of networking according to an embodiment of this application;
FIG. 8 is a schematic diagram of a format of FAD information according to an embodiment of this application;
FIG. 9 is a schematic diagram of a format of network slice sub-TLV 1 according to an embodiment of this application;
FIG. 10 is a schematic diagram of a format of network slice sub-TLV 2 according to an embodiment of this application;
FIG. 11 is a schematic diagram of a structure of an information processing apparatus 1100 according to an embodiment of this application;
FIG. 12 is a schematic diagram of a structure of another information processing apparatus 1200 according to an embodiment of this application;
FIG. 13 is a schematic diagram of a hardware structure of a controller 2000 according to an embodiment of this application;
FIG. 14 is a schematic diagram of a hardware structure of another controller 2100 according to an embodiment of this application;
FIG. 15 is a schematic diagram of a hardware structure of a first network device 2200 according to an embodiment of this application; and
FIG. 16 is a schematic diagram of a hardware structure of another first network device 2300 according to an embodiment of this application.

### DESCRIPTION OF EMBODIMENTS

The following describes technical solutions of this application with reference to the accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, words such as "example" and "for example" are used to represent giving an example, an illustration, or a description. Any embodiment or design solution described as an "example" in this application should not be explained as being more preferred or having more advantages than another embodiment or design solution. Exactly, the use of the word example is intended to present the concept in a specific manner.

In embodiments of this application, "corresponding and relevant (corresponding, relevant)" and "corresponding (corresponding)" may sometimes be mixed. It should be noted that, when a difference between the two is not emphasized, meanings to be expressed are consistent.

The network architecture and the service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

Reference to "an embodiment", "some embodiments", or the like described in the specification indicates that one or more embodiments of this application include a specific feature, structure, or characteristic described with reference to embodiments. Therefore, statements "in one embodiment", "in some embodiments", "in some other embodiments", "in other embodiments" and the like that differ in this specification do not necessarily refer to a same embodiment, but rather means "one or more but not all embodiments", unless otherwise specified. The terms "include", "comprise", "have", and variations thereof all mean "including, but not limited to", unless otherwise particularly specified.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. A character "/" generally indicates an "or" relationship between the associated objects. At least one of the following items (pieces) or a similar expression thereof refers to any combination of these items, including any combination of singular item (piece) or plural items (pieces). For example, at least one item (piece) of a, b, or c may indicate: a, b, c, a and b, a and c, b and c, or a, b, and c, where a, b, and c may be singular or plural.

Network slicing is an on-demand networking manner that enables an operator to obtain a plurality of end-to-end networks through separation on a unified infrastructure. To be specific, a physical network of the operator may be divided into a plurality of virtual networks. Each virtual network may flexibly cope with different network application scenarios based on different service requirements (for example, a delay, a bandwidth, security, and reliability). For a device in the network, a network slice may be configured based on network slice information. Based on the configured network slice, requirements of a service level agreement (service level agreement, SLA) between a service access point and each node are met in a given physical topology.

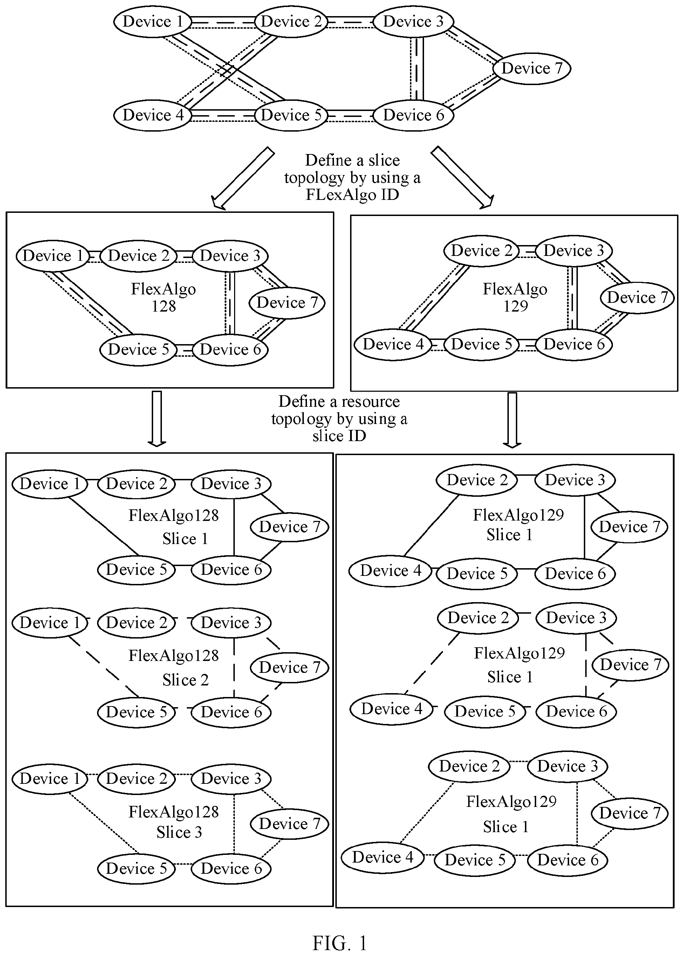

FIG. 1 is a schematic diagram of a scenario of a network slice applied to an embodiment of this application. As shown in FIG. 1, topology division may be performed on a network. Then, one or more slice identifiers (slice identifiers, SID) are allocated to a device in a network topology based on different service requirements (for example, a delay, a bandwidth, security, and reliability) of a user, to obtain a resource topology that meets different service requirements of the user through division.

In an example, a granularity for performing topology division on the network may be a granularity of an entire network, or may be a topology granularity defined by a network topology identifier. The topology identifier may be any one of the following: a multi-topology identifier (multi-topology identifier, MT ID) and a flexible algorithm identifier (flexible algorithm identifier, flex-algo ID). For example, as shown in FIG. 1, the network may be divided into two network topologies based on the flex-algo ID. In each network topology obtained through topology, a plurality of resource topologies may be further generated based on a slice identifier (slice identifier, SID). It should be understood that a physical interface of one device may be divided into a plurality of logical interfaces. Each logical interface may be understood as a network slice, and a corresponding SID is configured on each logical interface. The SID may also be referred to as a slice ID. In other words, one SID may indicate one network slice.

When the network slice division is performed, the device in the network may configure a network slice based on network slice information, for example, generate network slice path information. In a related technical solution, a controller delivers the network slice information to the device in the network through a network configuration protocol (network configuration protocol, netconf). For a K-level network slice, the controller needs to deliver a large amount of network slice information. Therefore, efficiency of delivering the network slice information by the controller through the netconf is low, and a delivery speed, a total amount of delivered network slice information in a unit time, or the like cannot be met.

In view of this, an embodiment of this application provides an information processing method. A delivery speed or a total amount of delivered network slice information in a unit time can be met, thereby improving efficiency of delivering the network slice information.

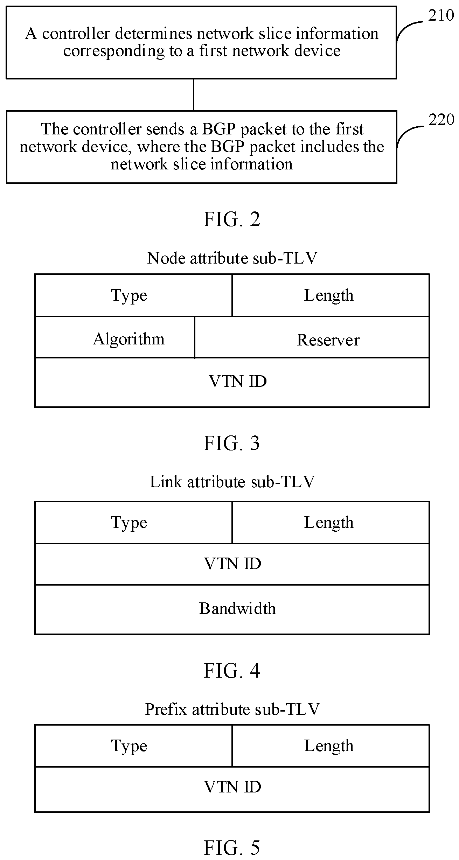

With reference to FIG. 2, the following describes in detail an information processing method according to an embodiment of this application.

FIG. 2 is a schematic flowchart of an information processing method according to an embodiment of this application. As shown in FIG. 2, the method may include steps 210 and 220. The following separately describes steps 210 and 220 in detail.

Step 210: A controller determines network slice information corresponding to a first network device.

The first network device may correspond to any device in FIG. 1. The device establishes a border gateway protocol (border gateway protocol, BGP) neighbor with the controller.

For example, the controller may determine corresponding network slice information for the first network device in a network based on different service requirements (for example, a latency, a bandwidth, security, and reliability). The network slice information may include but is not limited to node-level network slice information, link-level network slice information, and prefix-level network slice information that correspond to the first network. For example, the node-level network slice information described above may include identifiers (for example, slice IDs) of one or more network slices supported by the first network device and a topology identifier (for example, an MT ID or a flex-algo ID) corresponding to each network slice. The link-level network slice information described above may include information about a bandwidth needed by each network slice supported by the first network device. The prefix-level network slice information described above may include a correspondence between each network slice on the first network device and transmission traffic of an internet protocol version 4 (internet protocol version 4, IPv4) prefix or an internet protocol version 6 (internet protocol version 6, IPv6) prefix of the first network device.

Step 220: The controller sends a BGP packet to the first network device, where the BGP packet includes the network slice information.

After determining the corresponding network slice information for the first network device, the controller may send, to the first network device, the network slice information corresponding to the first network device, so that the first network device may configure the network slice based on the received network slice information. Specifically, the controller may send the BGP packet to the first network device. The BGP packet may include the network slice information corresponding to the first network device. For example, the BGP packet may be, for example, a BGP update message. There are a plurality of specific implementations in which the BGP packet includes the network slice information. The following describes in detail several possible implementations.

In a possible implementation, the BGP packet sent by the controller to the first network device includes link state (link state, LS) information. The LS information may include the network slice information sent to the first network device. In this implementation, the first network device may establish the BGP neighbor with the controller by using an LS address family.

It should be understood that the LS information is new network layer reachability information (network layer reachability information, NLRI), and is used for including information related to a link, a node, and an IPv4/IPv6 prefix, and may also be referred to as LS NLRI. An LS uses multiprotocol reachable NLRI (multiprotocol reachable NLRI, MP_REACH_NLRI) and multiprotocol unreachable NLRI (multiprotocol unreachable NLRI, MP_UNREACH_NLRI) attributes as containers of the LS NLRI. That is, the LS NLRI is included in the BGP update message as a type of the MP_REACH_NLRI or MP_UNREACH_NLRI attribute.

Based on different information that is included, the LS NLRI may be classified into the following types: node NLRI (node NLRI), link NLRI (link NLRI), prefix NLRI (prefix NLRI), and the like. The different NLRI described above may further include corresponding attributes, for example, a node attribute (node attribute), a link attribute (link attribute), and a prefix attribute (prefix attribute). These attributes are represented in a form of a type, a length, and a value (type length value, TLV). For example, a node attribute TLV includes the node attribute, a link attribute TLV includes the link attribute, and a prefix attribute TLV includes the prefix attribute.

In an example, an example in which the controller delivers corresponding node-level network slice information to the first network device is used. The node attribute TLV may include one or more sub-TLVs (sub-TLVs). In this embodiment of this application, a sub-TLV may be newly added to the node attribute TLV. The sub-TLV may also be referred to as a node attribute sub-TLV, and is used for including node-level network slice information. For example, a format of the node attribute sub-TLV is shown in FIG. 3. The node attribute sub-TLV may include an algorithm field and a virtual transport instance identifier (virtual transport instance identifier, VTN ID) field. The VTN ID field is the identifier (for example, the slice ID) of the network slice supported by the first network device. The algorithm field indicates a topology identifier (for example, the MT ID or the flex-algo ID) used by the network slice.

It should be noted that if the first network device can support a plurality of network slices, a plurality of node attribute sub-TLVs may be newly added to the node attribute TLV, and each node attribute sub-TLV includes an identifier (for example, the slice ID) of one network slice supported by the first network device and the topology identifier used by the network slice.

In another example, an example in which the controller delivers corresponding link-level network slice information to the first network device is used. The link attribute TLV may include one or more sub-TLVs (sub-TLVs). In this embodiment of this application, a sub-TLV may be newly added to the link attribute TLV. The sub-TLV may also be referred to as a link attribute sub-TLV, and is used for including link-level network slice information. For example, a format of the link attribute sub-TLV is shown in FIG. 4. The link attribute sub-TLV may include a VTN ID field and a bandwidth field. The VTN ID field is an identifier (for example, the slice ID) of the network slice supported by the first network device. The bandwidth field indicates a bandwidth that needs to be reserved for the network slice.

It should be noted that if the first network device can support a plurality of network slices, a plurality of link attribute sub-TLVs may be newly added to the link attribute TLV, and each link attribute sub-TLV includes an identifier (for example, the slice ID) of one network slice supported by the first network device and a bandwidth that needs to be reserved for the network slice.

In another example, an example in which the controller delivers corresponding prefix-level network slice information to the first network device is used. The prefix attribute TLV may include one or more sub-TLVs (sub-TLVs). In this embodiment of this application, a sub-TLV may be newly added to the prefix attribute TLV. The sub-TLV may also be referred to as a prefix attribute sub-TLV, and is used for including prefix-level network slice information. For example, a format of the prefix attribute sub-TLV is shown in FIG. 5. The prefix attribute sub-TLV may include a VTN ID field. The VTN ID field indicates an identifier (for example, the slice ID) of a network slice through which traffic corresponding to the IPv4 prefix or the IPv6 prefix needs to go through.

In another possible implementation, the BGP packet sent by the controller to the first network device includes network slice address family information. The network slice address family information may include the network slice information sent to the first network device. In this implementation, the first network device may establish the BGP neighbor with the controller by using a network slice address family.

It should be understood that the network slice address family information is a new type of network layer reachability information (network layer reachability information, NLRI), and may also be referred to as network slice NLRI (network slice NLRI). The network slice address family information uses multiprotocol reachable NLRI (multiprotocol reachable NLRI, MP_REACH_NLRI) and multiprotocol unreachable NLRI (multiprotocol unreachable NLRI, MP_UNREACH_NLRI) attributes as containers of the network slice NLRI. That is, the network slice NLRI is included in the BGP update message as a type of the MP_REACH_NLRI or MP_UNREACH_NLRI attribute.

Based on different information that is included, the network slice NLRI may be classified into the following types: node NLRI (node NLRI), link NLRI (link NLRI), prefix NLRI (prefix NLRI), and the like. The different NLRI described above may further include corresponding attributes, for example, a node attribute (node attribute), a link attribute (link attribute), and a prefix attribute (prefix attribute). These attributes are represented in a form of a type, a length, and a value (type length value, TLV). For example, a node attribute TLV includes a node attribute, a link attribute TLV includes a link attribute, and a prefix attribute TLV includes a prefix attribute.

The information slice information in the network slice address family information may include node-level network slice information, link-level network slice information, and prefix-level network slice information. Specifically, the node attribute TLV in the network slice address family information may include one or more sub-TLVs (which may also be referred to as node attribute sub-TLVs). The sub-TLV is used for including the node-level network slice information. The link attribute TLV may include one or more sub-TLVs (which may also be referred to as link attribute sub-TLVs). The sub-TLV is used for including the link-level network slice information. The prefix attribute TLV may include one or more sub-TLVs (which may also be referred to as prefix attribute sub-TLVs). The sub-TLV is used for including the prefix-level network slice information. For specific formats of the foregoing sub-TLVs, refer to descriptions in FIG. 3 to FIG. 5. Details are not described herein again.

In the foregoing technical solution, the controller delivers the network slice information to a device through a BGP. A delivery speed or a total amount of delivered network slice information in a unit time can be met, thereby improving efficiency of delivering the network slice information.

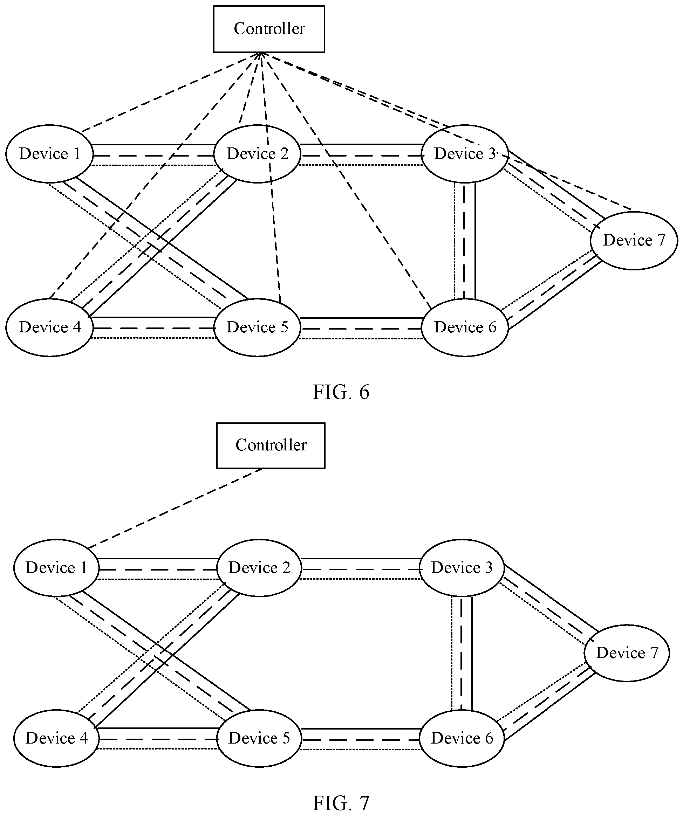

FIG. 6 is a schematic diagram of networking according to an embodiment of this application. As shown in FIG. 6, device 1 corresponds to the foregoing first network device. Each device in a network establishes a BGP neighbor with a controller. The controller may further separately send corresponding network slice information to device 2 to device 7 according to the method in FIG. 2. For a specific method, refer to the description in FIG. 2. Details are not described herein again.

FIG. 7 is another schematic diagram of networking according to an embodiment of this application. As shown in FIG. 7, some devices on a network establish BGP neighbors with a controller. For example, device 1 (corresponding to the first network device in the foregoing description) establishes a BGP neighbor with the controller. After the controller sends the network slice information corresponding to device 1 (corresponding to the first network device in the foregoing description) to device 1 according to the method shown in FIG. 2, device 1 floods the network slice information to device 2 to device 7. The following describes in detail a specific implementation process in which device 1 floods the network slice information to device 2 to device 7.

It should be understood that an interior gateway protocol (interior gateway protocol, IGP) may be run between the devices shown in FIG. 7. After obtaining the network slice information delivered by the controller by using a BGP packet, device 1 may convert the network slice information into global network slice information, and flood the global network slice information to other devices (for example, device 2 to device 7) through the IGP.

In an example, an example in which device 1 receives node-level network slice information delivered by the controller is used. The network slice information obtained by device 1 from the controller by using the BGP packet includes a VTN ID and a flex-algo ID used by a VTN. Device 1 obtains flex-algo definition (flex-algo definition, FAD) information corresponding to the flex-algo ID, and newly adds network slice sub-TLV 1 to the FAD information. Network slice sub-TLV 1 is used for including the VTN ID described above.

In another example, an example in which device 1 receives link-level network slice information delivered by the controller is used. The network slice information obtained by device 1 from the controller by using the BGP packet includes a VTN ID and information about a bandwidth corresponding to a VTN. Device 1 obtains a corresponding interface by using a link attribute TLV, and converts the link-level network slice information into affinity attribute information of a slice interface associated with the VTN and information about a bandwidth that needs to be reserved for the VTN. Specifically, network slice sub-TLV 2 may be newly added to the FAD information described above. Network slice sub-TLV 2 is used for including the foregoing VTN ID, affinity attribute information of the slice interface associated with the VTN, and information about a bandwidth that needs to be reserved for the VTN. Alternatively, network slice sub-TLV 2 and network slice sub-TLV 3 may be newly added to the FAD information described above. The network slice sub-TLV 2 is used for including the foregoing VTN ID and affinity attribute information of the slice interface associated with the VTN. Network slice sub-TLV 3 is used for including the foregoing VTN ID and information about a bandwidth that needs to be reserved for the VTN.

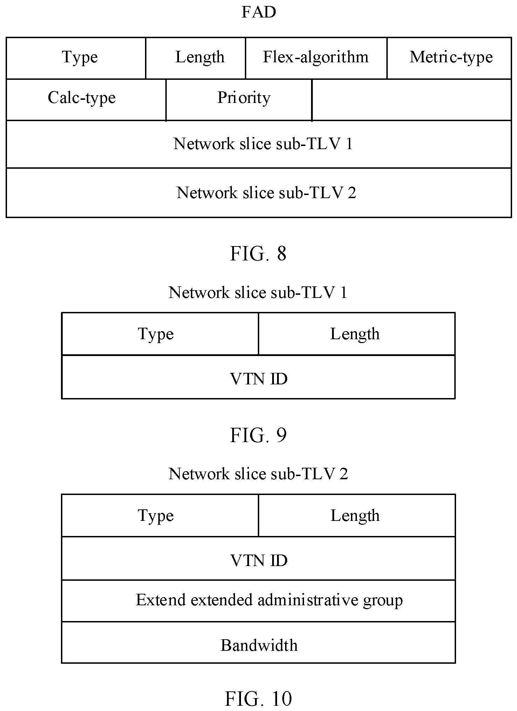

For example, a format of the FAD information is shown in FIG. 8. The FAD information may include a flex-algorithm field, a priority (priority) field, a plurality of sub-TLV fields, and the like. The flex-algorithm field indicates the flex-algo ID used by the VTN. The priority field indicates a priority of the FAD information. The plurality of sub-TLV fields may include network slice sub-TLV 1 and network slice sub-TLV 2. A format of network slice sub-TLV 1 is shown in FIG. 9. Network slice sub-TLV 1 includes a VTN ID field, indicating an identifier (for example, a slice ID) of a network slice supported by device 1. A format of network slice sub-TLV 2 is shown in FIG. 10. Network slice sub-TLV 2 includes a VTN ID field, an extend extended administrative group (extend extended administrative group) field, and a bandwidth field. The extend extended administrative group field indicates affinity attribute information of a slice interface associated with the VTN. In other words, a VTN ID needs to be configured on an interface of an affinity attribute. The bandwidth field indicates a bandwidth that needs to be reserved for the VTN.

After the foregoing conversion, device 1 may add the global network slice information to the FAD information, and flood the global network slice information to the other devices (for example, device 2 to device 7) in the network through the IGP protocol, for example, an intermediate system to intermediate system (intermediate system to intermediate system, ISIS) or an open shortest path first (open shortest path first, OSPF). Specifically, device 1 may send an ISIS link state protocol (ISIS link state protocol, ISIS LSP) packet to each of the other devices in the network. The ISIS LSP packet includes the foregoing FAD information. Alternatively, an OSPF link-state advertisement (OSPF link-state advertisement, OSPF LSA) packet may be sent to each of the other devices in the network. The OSPF LSA packet includes the foregoing FAD information.

The other devices (device 2 to device 7) in the network may perform network slice configuration after receiving the global network slice information included in the FAD information sent by device 1. Specifically, for example, the other devices (device 2 to device 7) in the network may generate, based on the flex-algorithm field in the FAD information, a network slice to use flex-algo topology information. Alternatively, the other devices in the network may obtain, based on an affinity attribute (for example, an extend extended administrative group field in the FAD information) of a slice interface associated with the VTN, all interfaces that match the affinity attribute on the device. A network slice ID is configured on the interface, and a bandwidth resource is reserved for the network slice ID based on the bandwidth field in the FAD information.

It should be noted that if only one device (for example, device 1) in the network floods the FAD information to the other devices, the other devices may perform network slice configuration based on the global network slice information included in the FAD information. If a plurality of devices in the network respectively flood FAD information to the other devices, the other devices may determine elected FAD information based on a priority field in each piece of FAD information and a same election criterion, and perform network slice configuration based on global network slice information included in the elected FAD information.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

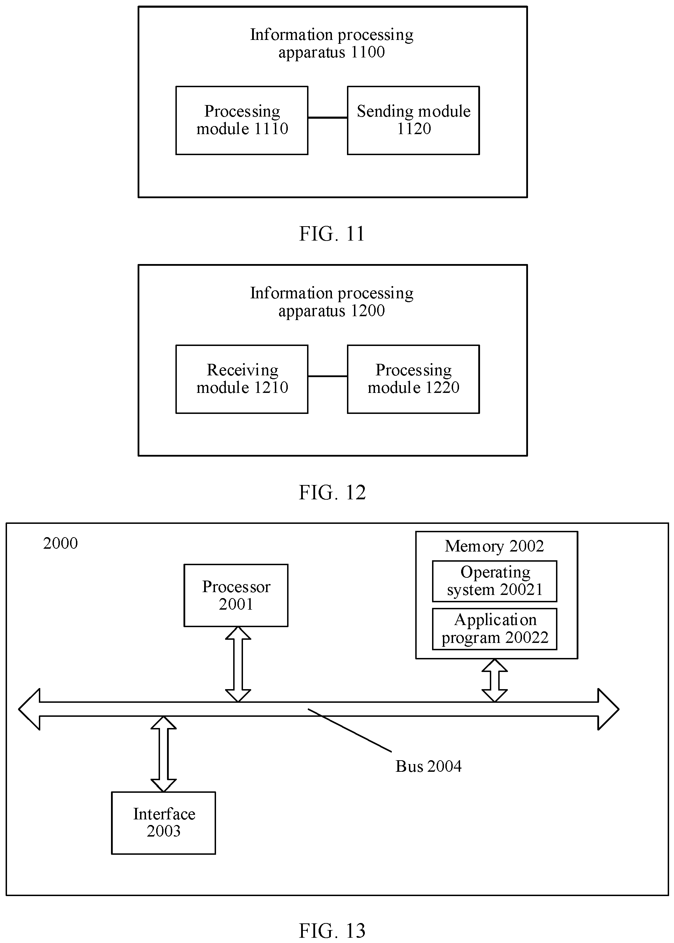

The foregoing describes in detail the information processing method provided in embodiments of this application with reference to FIG. 1 to FIG. 10. The following describes in detail embodiments of an apparatus in this application with reference to FIG. 11 to FIG. 16. It should be understood that the description of the method embodiment corresponds to the description of the apparatus embodiment. Therefore, for a part that is not described in detail, refer to the foregoing method embodiment.

FIG. 11 is a schematic diagram of a structure of an information processing apparatus 1100 according to an embodiment of this application. The apparatus 1100 is disposed in a controller. The information processing apparatus 1100 shown in FIG. 11 may perform corresponding steps of the information processing method in the foregoing embodiment. As shown in FIG. 11, the information processing apparatus 1100 includes a processing module 1110 and a sending module 1120. The processing module 1110 is configured to determine network slice information corresponding to a first network device. The sending module 1120 is configured to send a border gateway protocol BGP packet to the first network device. The BGP packet includes the network slice information. The network slice information is used by the first network device to configure a network slice.

Optionally, the BGP packet includes link state LS information. The LS information includes the network slice information.

Optionally, the LS information includes a node attribute sub-TLV The node attribute sub-TLV includes node-level network slice information. The node-level network slice information includes an identifier of a network slice supported by the first network device and a topology identifier corresponding to the network slice.

Optionally, the LS information includes a link attribute sub-TLV The link attribute sub-TLV includes link-level network slice information. The link-level network slice information includes the identifier of the network slice supported by the first network device and information about a bandwidth reserved for the network slice.

Optionally, the LS information includes a prefix attribute sub-TLV. The prefix attribute sub-TLV includes prefix-level network slice information. The prefix-level network slice information includes an identifier of a network slice that is used for transmitting an IPv4 packet or an IPv6 packet and that is on the first network device.

Optionally, the BGP packet includes network slice address family information. The network slice address family information includes the network slice information.

Optionally, the network slice address family information includes a node attribute sub-TLV The node attribute sub-TLV includes link-level network slice information.

Optionally, the network slice address family information includes a link attribute sub-TLV The link attribute sub-TLV includes prefix-level network slice information.

Optionally, the network slice address family information includes a prefix attribute sub-TLV. The prefix attribute sub-TLV includes prefix-level network slice information.

Optionally, the BGP packet is a BGP update message.

FIG. 12 is a schematic diagram of a structure of another information processing apparatus 1200 according to an embodiment of this application. The apparatus 1200 is disposed in a first network device. The information processing apparatus 1200 shown in FIG. 12 may perform corresponding steps of the information processing method in the foregoing embodiment. As shown in FIG. 12, the information processing apparatus 1200 includes a receiving module 1210 and a processing module 1220. The receiving module 1210 is configured to receive a border gateway protocol BGP packet sent by a controller, where the BGP packet includes network slice information. The processing module 1220 is configured to configure a network slice based on the network slice information.

Optionally, the BGP packet includes link state LS information. The LS information includes the network slice information.

Optionally, the LS information includes a node attribute sub-TLV The node attribute sub-TLV includes node-level network slice information. The node-level network slice information includes an identifier of a network slice supported by the first network device and a topology identifier corresponding to the network slice.

Optionally, the LS information includes a link attribute sub-TLV The link attribute sub-TLV includes link-level network slice information. The link-level network slice information includes the identifier of the network slice supported by the first network device and information about a bandwidth reserved for the network slice.

Optionally, the LS information includes a prefix attribute sub-TLV. The prefix attribute sub-TLV includes prefix-level network slice information. The prefix-level network slice information includes an identifier of a network slice that is used for transmitting an IPv4 packet or an IPv6 packet and that is on the first network device.

Optionally, the BGP packet includes network slice address family information. The network slice address family information includes the network slice information.

Optionally, the network slice address family information includes a node attribute sub-TLV The node attribute sub-TLV includes link-level network slice information.

Optionally, the network slice address family information includes a link attribute sub-TLV The link attribute sub-TLV includes prefix-level network slice information.

Optionally, the network slice address family information includes a prefix attribute sub-TLV. The prefix attribute sub-TLV includes prefix-level network slice information.

Optionally, the processing module 1220 is further configured to determine global network slice information based on the network slice information. The global network slice information includes an identifier of a network slice, a topology identifier used by the network slice, a link affinity attribute of a slice interface associated with the network slice, and information about a bandwidth reserved for the network slice.

The apparatus 1200 further includes a sending module 1230, configured to send an interior gateway protocol IGP packet to a second network device. The IGP packet includes the global network slice information. The IGP packet is used by the second network device to configure a network slice based on the global network slice information.

Optionally, the IGP packet includes flexible algorithm definition FAD information. The FAD information includes a network slice sub-TLV. The network slice sub-TLV includes the global network slice information.

Optionally, the BGP packet is a BGP update message.

FIG. 13 is a schematic diagram of a hardware structure of a controller 2000 according to an embodiment of this application. The controller 2000 shown in FIG. 13 may perform the information processing method in the foregoing embodiment.

As shown in FIG. 13, the controller 2000 includes a processor 2001, a memory 2002, an interface 2003, and a bus 2004. The interface 2003 may be implemented in a wireless or wired manner, and may be specifically a network adapter. The processor 2001, the memory 2002, and the interface 2003 are connected through the bus 2004.

The interface 2003 may specifically include a transmitter and a receiver, and is configured to implement the foregoing receiving and sending by the controller.

The processor 2001 is configured to perform processing performed by the controller in the foregoing embodiment. The memory 2002 includes an operating system 20021 and an application program 20022, and is configured to store a program, code, or instructions. When executing the program, the code, or the instructions, the processor or a hardware device may complete a processing process related to the controller in the method embodiment. Optionally, the memory 2002 may include a read-only memory (read-only memory, ROM) and a random access memory (random access memory, RAM). The ROM includes a basic input/output system (basic input/output system, BIOS) or an embedded system. The RAM includes an application program and an operating system. When the controller 2000 needs to be run, a BIOS or a bootloader in an embedded system that is built into the ROM is used to boot a system to start, and boot the controller 2000 to enter a normal running state. After entering the normal running state, the controller 2000 runs an application program and an operating system in the RAM, to complete a processing process related to the controller 2000 in the method embodiment.

It may be understood that FIG. 13 shows only a simplified design of the controller 2000. In actual application, the controller may include any quantity of interfaces, processors, or memories.

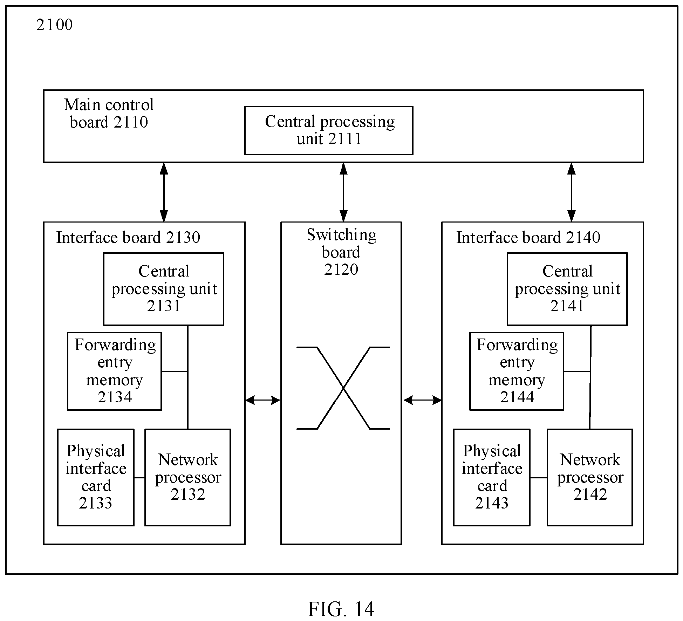

FIG. 14 is a schematic diagram of a hardware structure of another controller 2100 according to an embodiment of this application. The controller 2100 shown in FIG. 14 may perform the information processing method in the foregoing embodiment.

As shown in FIG. 14, the controller 2100 includes a main control board 2110, an interface board 2130, a switching board 2120, and an interface board 2140. The main control board 2110, the interface boards 2130 and 2140, and the switching board 2120 are connected to a system backplane by using a system bus to implement interworking. The main control board 2110 is configured to complete functions such as system management, device maintenance, and protocol processing. The switching board 2120 is configured to complete data exchange between interface boards (where the interface board is also referred to as a line card or a service board). The interface boards 2130 and 2140 are configured to provide various service interfaces (for example, a POS interface, a GE interface, and an ATM interface), and implement data packet forwarding.

The interface board 2130 may include a central processing unit 2131, a forwarding entry memory 2134, a physicalinterface card 2133, and a network processor 2132. The central processing unit 2131 is configured to control and manage the interface board and communicate with the central processing unit on the main control board. The forwarding entry memory 2134 is configured to store an entry. The physical interface card 2133 is configured to complete receiving and sending of traffic.

It should be understood that an operation on the interface board 2140 in this embodiment of this application is consistent with an operation on the interface board 2130. For brevity, details are not described again.

It should be understood that the controller 2100 in this embodiment may correspond to functions and/or various steps implemented in the foregoing method embodiments. Details are not described herein again.

In addition, it should be noted that there may be one or more main control boards. When there are a plurality of main control boards, the main control boards may include an active main control board and a standby main control board. There may be one or more interface boards. A stronger data processing capability of the controller indicates more interface boards. There may also be one or more physical interface cards on the interface board. There may be no or one or more switching boards. When there are a plurality of switching boards, load sharing and redundancy backup can be implemented. In a centralized forwarding architecture, the controller may not need the switching board. The interface board is responsible for processing service data of an entire system. In a distributed forwarding architecture, the controller may have at least one switching board. Data exchange between a plurality of interface boards is implemented by using the switching board, to provide large-capacity data exchange and a processing capability. Therefore, data access and processing capabilities of the controller in the distributed architecture are higher than those of a device in a centralized architecture. A specific architecture that is to be used depends on a specific networking deployment scenario. This is not limited herein.

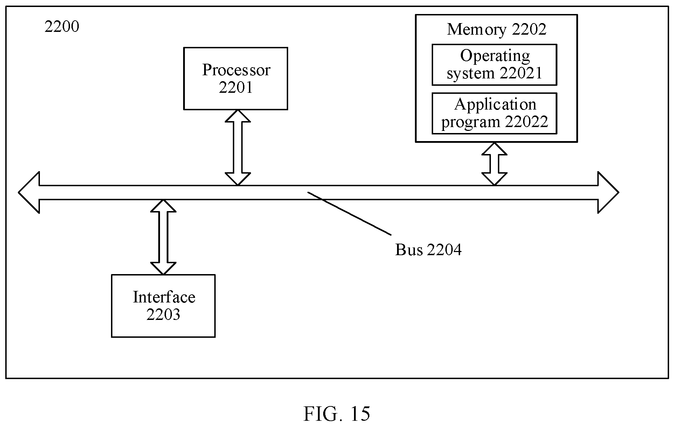

FIG. 15 is a schematic diagram of a hardware structure of a first network device 2200 according to an embodiment of this application. The first network device 2200 shown in FIG. 15 may perform corresponding steps performed by the first network device in the method in the foregoing embodiment. As shown in FIG. 15, the first network device 2200 includes a processor 2201, a memory 2202, an interface 2203, and a bus 2204. The interface 2203 may be implemented in a wireless or wired manner, and may be specifically a network adapter. The processor 2201, the memory 2202, and the interface 2203 are connected through the bus 2204. The interface 2203 may specifically include a transmitter and a receiver, and is configured to implement the foregoing receiving and sending by the first network device. The processor 2201 is configured to perform processing performed by the first network device in the foregoing embodiment. The memory 2202 includes an operating system 22021 and an application program 22022, and is configured to store a program, code, or instructions. When executing the program, the code, or the instructions, the processor or a hardware device may complete a processing process related to the first network device in the method embodiment. Optionally, the memory 2202 may include a read-only memory (read-only memory, ROM) and a random access memory (random access memory, RAM). The ROM includes a basic input/output system (basic input/output system, BIOS) or an embedded system. The RAM includes an application program and an operating system. When the first network device needs to be run, a BIOS or a bootloader in an embedded system that is built into the ROM is used to boot a system to start, and boot the first network device to enter a normal running state. After entering the normal running state, the first network device runs an application program and an operating system in the RAM, to complete a processing process related to the first network device in the method embodiment. FIG. 15 shows only a simplified design of the first network device 2200. In actual application, the first network device may include any quantity of interfaces, processors, or memories.

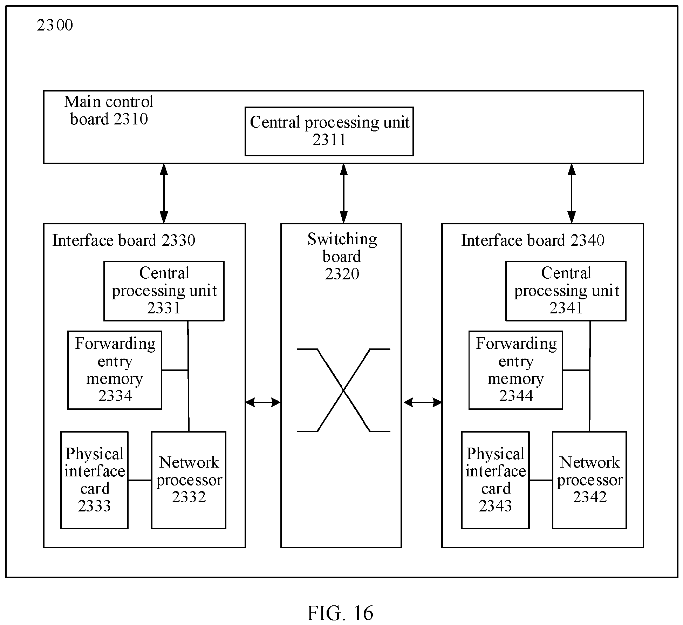

FIG. 16 is a schematic diagram of a hardware structure of another first network device 2300 according to an embodiment of this application. The first network device 2300 shown in FIG. 16 may perform corresponding steps performed by the first network device in the method in the foregoing embodiment. As shown in FIG. 16, the first network device 2300 includes a main control board 2310, an interface board 2330, a switching board 2320, and an interface board 2340. The main control board 2310, the interface boards 2330 and 2340, and the switching board 2320 are connected to a system backplane by using a system bus to implement interworking. The main control board 2310 is configured to complete functions such as system management, device maintenance, and protocol processing. The switching board 2320 is configured to complete data exchange between interface boards (where the interface board is also referred to as a line card or a service board). The interface boards 2330 and 2340 are configured to provide various service interfaces (for example, a POS interface, a GE interface, and an ATM interface), and implement data packet forwarding. The interface board 2330 may include a central processing unit 2331, a forwarding entry memory 2334, a physicalinterface card 2333, and a network processor 2332. The central processing unit 2331 is configured to control and manage the interface board and communicate with the central processing unit on the main control board. The forwarding entry memory 2334 is configured to store an entry. The physical interface card 2133 is configured to complete receiving and sending of traffic. In this embodiment of this application, an operation on the interface board 2340 is consistent with an operation on the interface board 2330. For brevity, details are not described again. The first network device 2300 in this embodiment may correspond to functions and/or various steps implemented in the foregoing method embodiments. Details are not described herein again.

An embodiment of this application further provides a computer-readable medium. The computer-readable medium stores program code. When the computer program code is run on a computer, the computer is enabled to perform the method performed by the first network device. The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

An embodiment of this application further provides a computer-readable medium. The computer-readable medium stores program code. When the computer program code is run on a computer, the computer is enabled to perform the method performed by the foregoing controller. The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

An embodiment of this application further provides a chip, applied to a first network device. The chip includes at least one processor, at least one memory, and an interface circuit. The interface circuit is responsible for information exchange between the chip and the outside. The at least one memory, the interface circuit, and the at least one processor are interconnected by using a line. The at least one memory stores instructions. The instructions are executed by the at least one processor, to perform the operations of the first network device in the methods in the foregoing aspects. In a specific implementation process, the chip may be implemented in a form of a central processing unit (central processing unit, CPU), a microcontroller unit (microcontroller unit, MCU), a micro processing unit (micro processing unit, MPU), a digital signal processor (digital signal processor, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

An embodiment of this application further provides a chip, applied to a controller. The chip includes at least one processor, at least one memory, and an interface circuit. The interface circuit is responsible for information exchange between the chip and the outside. The at least one memory, the interface circuit, and the at least one processor are interconnected by using a line. The at least one memory stores instructions. The instructions are executed by the at least one processor to perform operations related to the controller in the methods in the foregoing aspects. In a specific implementation process, the chip may be implemented in a form of a central processing unit (central processing unit, CPU), a microcontroller unit (microcontroller unit, MCU), a micro processing unit (micro processing unit, MPU), a digital signal processor (digital signal processor, DSP), a system on chip (system on chip, SoC), an application-specific integrated circuit (application-specific integrated circuit, ASIC), a field programmable gate array (field programmable gate array, FPGA), or a programmable logic device (programmable logic device, PLD).

An embodiment of this application further provides a computer program product, applied to a first network device. The computer program product includes a series of instructions. When the instructions are run, the operations of the first network device in the methods in the foregoing aspects are performed.

An embodiment of this application further provides a computer program product, applied to a controller. The computer program product includes a series of instructions. When the instructions are run, operations of the controller in the methods in the foregoing aspects are performed.

An embodiment of this application further provides a system, including the first network device and the controller.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for convenient and brief description, for a detailed working process of the foregoing system, apparatus, and units, refer to a corresponding process in the foregoing method embodiments, and details are not described herein again.

In several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information processing method, wherein the method comprises:
determining, by a controller, network slice information corresponding to a first network device; and
sending, by the controller, a border gateway protocol BGP packet to the first network device, wherein the BGP packet comprises the network slice information, and the network slice information is used by the first network device to configure a network slice.

2. The method according to claim 1, wherein the BGP packet comprises link state LS information, and the LS information comprises the network slice information.

3. The method according to claim 2, wherein the LS information comprises a node attribute sub-TLV, the node attribute sub-TLV comprises node-level network slice information, and the node-level network slice information comprises an identifier of a network slice supported by the first network device and a topology identifier corresponding to the network slice.

4. The method according to claim 2 or 3, wherein the LS information comprises a link attribute sub-TLV, the link attribute sub-TLV comprises link-level network slice information, and the link-level network slice information comprises the identifier of the network slice supported by the first network device and information about a bandwidth reserved for the network slice.

5. The method according to any one of claims 2 to 4, wherein the LS information comprises a prefix attribute sub-TLV, the prefix attribute sub-TLV comprises prefix-level network slice information, and the prefix-level network slice information comprises an identifier of a network slice that is used for transmitting an IPv4 packet or an IPv6 packet and that is on the first network device.

6. The method according to claim 1, wherein the BGP packet comprises network slice address family information, and the network slice address family information comprises the network slice information.

7. The method according to claim 6, wherein the network slice address family information comprises a node attribute sub-TLV, and the node attribute sub-TLV comprises link-level network slice information.

8. The method according to claim 6 or 7, wherein the network slice address family information comprises a link attribute sub-TLV, and the link attribute sub-TLV comprises prefix-level network slice information.

9. The method according to any one of claims 6 to 8, wherein the network slice address family information comprises a prefix attribute sub-TLV, and the prefix attribute sub-TLV comprises prefix-level network slice information.

10. The method according to any one of claims 1 to 9, wherein the BGP packet is a BGP update message.

11. An information processing method, wherein the method comprises:
receiving, by a first network device, a border gateway protocol BGP packet sent by a controller, wherein the BGP packet comprises network slice information; and
configuring, by the first network device, a network slice based on the network slice information.

12. The method according to claim 11, wherein the BGP packet comprises link state LS information, and the LS information comprises the network slice information.

13. The method according to claim 12, wherein the LS information comprises a node attribute sub-TLV, the node attribute sub-TLV comprises node-level network slice information, and the node-level network slice information comprises an identifier of a network slice supported by the first network device and a topology identifier corresponding to the network slice.

14. The method according to claim 12 or 13, wherein the LS information comprises a link attribute sub-TLV, the link attribute sub-TLV comprises link-level network slice information, and the link-level network slice information comprises the identifier of the network slice supported by the first network device and information about a bandwidth reserved for the network slice.

15. The method according to any one of claims 12 to 14, wherein the LS information comprises a prefix attribute sub-TLV, the prefix attribute sub-TLV comprises prefix-level network slice information, and the prefix-level network slice information comprises an identifier of a network slice that is used for transmitting an IPv4 packet or an IPv6 packet and that is on the first network device.

16. The method according to claim 11, wherein the BGP packet comprises network slice address family information, and the network slice address family information comprises the network slice information.

17. The method according to claim 16, wherein the network slice address family information comprises a node attribute sub-TLV, and the node attribute sub-TLV comprises link-level network slice information.

18. The method according to claim 16 or 17, wherein the network slice address family information comprises a link attribute sub-TLV, and the link attribute sub-TLV comprises prefix-level network slice information.

19. The method according to any one of claims 16 to 18, wherein the network slice address family information comprises a prefix attribute sub-TLV, and the prefix attribute sub-TLV comprises prefix-level network slice information.

20. The method according to any one of claims 11 to 19, wherein the method further comprises:
determining, by the first network device, global network slice information based on the network slice information, wherein the global network slice information comprises an identifier of a network slice, a topology identifier used by the network slice, a link affinity attribute of a slice interface associated with the network slice, and information about a bandwidth reserved for the network slice; and
sending, by the first network device, an interior gateway protocol IGP packet to a second network device, wherein the IGP packet comprises the global network slice information, and the IGP packet is used by the second network device to configure a network slice based on the global network slice information.

21. The method according to claim 20, wherein the IGP packet comprises flexible algorithm definition FAD information, the FAD information comprises a network slice sub-TLV, and the network slice sub-TLV comprises the global network slice information.

22. The method according to any one of claims 11 to 21, wherein the BGP packet is a BGP update message.

23. An information processing apparatus, wherein the apparatus is disposed in a controller and comprises:
a processing module, configured to determine network slice information corresponding to a first network device; and
a sending module, configured to send a border gateway protocol BGP packet to the first network device, wherein the BGP packet comprises the network slice information, and the network slice information is used by the first network device to configure a network slice.

24. The apparatus according to claim 23, wherein the BGP packet comprises link state LS information, and the LS information comprises the network slice information.

25. The apparatus according to claim 24, wherein the LS information comprises a node attribute sub-TLV, the node attribute sub-TLV comprises node-level network slice information, and the node-level network slice information comprises an identifier of a network slice supported by the first network device and a topology identifier corresponding to the network slice.

26. The apparatus according to claim 24 or 25, wherein the LS information comprises a link attribute sub-TLV, the link attribute sub-TLV comprises link-level network slice information, and the link-level network slice information comprises the identifier of the network slice supported by the first network device and information about a bandwidth reserved for the network slice.

27. The apparatus according to any one of claims 24 to 26, wherein the LS information comprises a prefix attribute sub-TLV, the prefix attribute sub-TLV comprises prefix-level network slice information, and the prefix-level network slice information comprises an identifier of a network slice that is used for transmitting an IPv4 packet or an IPv6 packet and that is on the first network device.

28. The apparatus according to claim 23, wherein the BGP packet comprises network slice address family information, and the network slice address family information comprises the network slice information.

29. The apparatus according to claim 28, wherein the network slice address family information comprises a node attribute sub-TLV, and the node attribute sub-TLV comprises link-level network slice information.

30. The apparatus according to claim 28 or 29, wherein the network slice address family information comprises a link attribute sub-TLV, and the link attribute sub-TLV comprises prefix-level network slice information.

31. The apparatus according to any one of claims 28 to 30, wherein the network slice address family information comprises a prefix attribute sub-TLV, and the prefix attribute sub-TLV comprises prefix-level network slice information.

32. The apparatus according to any one of claims 23 to 31, wherein the BGP packet is a BGP update message.

33. An information processing apparatus, wherein the apparatus is disposed in a first network device and comprises:
a receiving module, configured to receive a border gateway protocol BGP packet sent by a controller, wherein the BGP packet comprises network slice information; and
a processing module, configured to configure a network slice based on the network slice information.

34. The apparatus according to claim 33, wherein the BGP packet comprises link state LS information, and the LS information comprises the network slice information.

35. The apparatus according to claim 34, wherein the LS information comprises a node attribute sub-TLV, the node attribute sub-TLV comprises node-level network slice information, and the node-level network slice information comprises an identifier of a network slice supported by the first network device and a topology identifier corresponding to the network slice.

36. The apparatus according to claim 34 or 35, wherein the LS information comprises a link attribute sub-TLV, the link attribute sub-TLV comprises link-level network slice information, and the link-level network slice information comprises the identifier of the network slice supported by the first network device and information about a bandwidth reserved for the network slice.

37. The apparatus according to any one of claims 34 to 36, wherein the LS information comprises a prefix attribute sub-TLV, the prefix attribute sub-TLV comprises prefix-level network slice information, and the prefix-level network slice information comprises an identifier of a network slice that is used for transmitting an IPv4 packet or an IPv6 packet and that is on the first network device.

38. The apparatus according to claim 33, wherein the BGP packet comprises network slice address family information, and the network slice address family information comprises the network slice information.

39. The apparatus according to claim 38, wherein the network slice address family information comprises a node attribute sub-TLV, and the node attribute sub-TLV comprises link-level network slice information.

40. The apparatus according to claim 38 or 39, wherein the network slice address family information comprises a link attribute sub-TLV, and the link attribute sub-TLV comprises prefix-level network slice information.

41. The apparatus according to any one of claims 38 to 40, wherein the network slice address family information comprises a prefix attribute sub-TLV, and the prefix attribute sub-TLV comprises prefix-level network slice information.

42. The apparatus according to any one of claims 33 to 41, wherein the processing module is further configured to determine global network slice information based on the network slice information, and the global network slice information comprises an identifier of a network slice, a topology identifier used by the network slice, a link affinity attribute of a slice interface associated with the network slice, and information about a bandwidth reserved for the network slice; and
the apparatus further comprises:
a sending module, configured to send an interior gateway protocol IGP packet to a second network device, wherein the IGP packet comprises the global network slice information, and the IGP packet is used by the second network device to configure a network slice based on the global network slice information.

43. The apparatus according to claim 42, wherein the IGP packet comprises flexible algorithm definition FAD information, the FAD information comprises a network slice sub-TLV, and the network slice sub-TLV comprises the global network slice information.

44. The apparatus according to any one of claims 33 to 43, wherein the BGP packet is a BGP update message.

45. A controller, comprising a processor and a memory, wherein the memory is configured to store a program or code, and the processor is configured to invoke the program from the memory and run the program to perform the method according to any one of claims 1 to 10.

46. A first network device, comprising a processor and a memory, wherein the memory is configured to store a program or code, and the processor is configured to invoke the program from the memory and run the program to perform the method according to any one of claims 11 to 22.

47. An information processing system, comprising the apparatus according to any one of claims 23 to 32 and/or the apparatus according to any one of claims 33 to 44.
